(19) Europäisches Patentamt
European Patent Office
Office européen des brevets

(11) EP 1 740 048 B1

(12) **EUROPÄISCHE PATENTSCHRIFT**

(45) Veröffentlichungstag und Bekanntmachung des Hinweises auf die Patenterteilung:
**13.02.2008 Patentblatt 2008/07**

(21) Anmeldenummer: **05731909.7**

(22) Anmeldetag: **15.04.2005**

(51) Int Cl.:
***A01N 43/90*** *(2006.01)*

(86) Internationale Anmeldenummer:
**PCT/EP2005/004003**

(87) Internationale Veröffentlichungsnummer:
**WO 2005/102053 (03.11.2005 Gazette 2005/44)**

(54) **FUNGIZIDE MISCHUNGEN**

FUNGICIDAL MIXTURES

MELANGES FONGICIDES

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **21.04.2004 DE 102004019934**

(43) Veröffentlichungstag der Anmeldung:
**10.01.2007 Patentblatt 2007/02**

(73) Patentinhaber: **BASF Aktiengesellschaft**
**67056 Ludwigshafen (DE)**

(72) Erfinder:
- **TORMO I BLASCO, Jordi**
  **69514 Laudenbach (DE)**
- **GROTE, Thomas**
  **67157 Wachenheim (DE)**
- **SCHERER, Maria**
  **76829 Godramstein (DE)**
- **STIERL, Reinhard**
  **67251 Freinsheim (DE)**
- **STRATHMANN, Siegfried**
  **67117 Limburgerhof (DE)**
- **SCHÖFL, Ulrich**
  **68782 Brühl (DE)**
- **NIEDENBRÜCK, Matthias**
  **67117 Limburgerhof (DE)**

(56) Entgegenhaltungen:
**EP-A- 0 988 790**
**WO-A-01/44215**
**WO-A-98/08386**
**WO-A-98/46607**
**WO-A-99/56551**
**WO-A-02/056690**
**WO-A-03/017760**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 740 048 B1

Printed by Jouve, 75001 PARIS (FR)

## Beschreibung

Die vorliegende Erfindung betrifft fungizide Mischungen, enthaltend als aktive Komponenten

1) das Triazolopyrimidinderivat der Formel I,

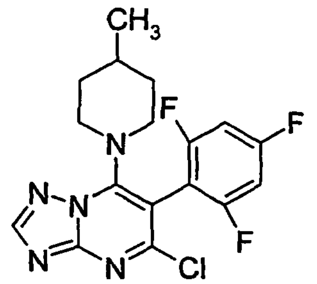

I

und

2) mindestens ein Valinamidderivat der Formel II,

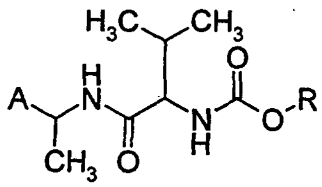

II

in der

A Phenyl, Naphthyl oder Benzothiazolyl, welche Gruppen unsubstituiert oder durch Methyl oder Halogen substituiert sind, und
R $C_1$-$C_4$-Alkyl bedeutet,

in einer synergistisch wirksamen Menge.

Außerdem betrifft die Erfindung ein Verfahren zur Bekämpfung von Schadpilzen mit Mischungen der Verbindung I mit der Verbindung II und die Verwendung der Verbindung I mit der Verbindung II zur Herstellung derartiger Mischungen sowie Mittel, die diese Mischungen enthalten.

Die Verbindung I, 5-Chlor-7-(4-methyl-piperidin-1-yl)-6-(2,4,6-trifluor-phenyl)-[1,2,4]triazolo[1,5-a]pyrimidin, ihre Herstellung und deren Wirkung gegen Schadpilze ist aus der Literatur bekannt (WO 98/46607).

Die Verbindungen II, ihre Herstellung und ihre Wirkung gegen Schadpilze sind ebenfalls aus der Literatur bekannt (EP-A 472 996; DE-A 43 21 897; WO 96/07638; DE-A 195 31 814; JP-A 09/323 984).

Mischungen von Triazolopyrimidinen mit anderen Wirkstoffen sind aus EP-A 988 790 und US 6 268 371 allgemein bekannt.

Im Hinblick auf eine Senkung der Aufwandmengen und eine Verbreiterung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilze zeigen (synergistische Mischungen).

Demgemäss wurden die eingangs definierten Mischungen gefunden. Es wurde außerdem gefunden, dass sich bei gleichzeitiger gemeinsamer oder getrennter Anwendung der Verbindung I und mindestens einer der Verbindungen II oder bei Anwendung der Verbindung I und mindestens einer der Verbindung II nacheinander Schadpilze besser bekämpfen lassen als mit den Einzelverbindungen.

Die Mischungen der Verbindung I und mindestens einer Verbindung II bzw. die gleichzeitige gemeinsame oder getrennte Verwendung der Verbindung I und mindestens einer Verbindung II zeichnen sich aus durch eine hervorragende Wirksamkeit gegen ein breites Spektrum von pflanzenpathogenen Pilzen, insbesondere aus der Klasse der *Ascomyceten, Deuteromyceten, Oomyceten* und *Basidiomyceten.* Besonders vorteilhaft eignen sie sich zur Bekämpfung von

*Ascomyceten.* Sie können im Pflanzenschutz als Blatt-, Beiz- und Bodenfungizide eingesetzt werden.

Besondere Bedeutung haben sie für die Bekämpfung einer Vielzahl von Pilzen an verschiedenen Kulturpflanzen wie Bananen, Baumwolle, Gemüsepflanzen (z.B. Gurken, Bohnen und Kürbisgewächse), Gerste, Gras, Hafer, Kaffee, Kartoffeln, Mais, Obstpflanzen, Reis, Roggen, Soja, Tomaten, Wein, Weizen, Zierpflanzen, Zuckerrohr und einer Vielzahl von Samen.

Insbesondere eignen sie sich zur Bekämpfung der folgenden pflanzenpathogenen Pilze: *Blumeria graminis* (echter Mehltau) an Getreide, *Erysiphe cichoracearum* und *Sphaerotheca fuliginea* an Kürbisgewächsen, *Podosphaera leucotricha* an Äpfeln, *Uncinula necator* an Reben, *Puccinia*-Arten an Getreide, *Rhizoctonia*-Arten an Baumwolle, Reis und Rasen, *Ustilago*-Arten an Getreide und Zuckerrohr, *Venturia inaequalis* an Äpfeln, *Bipolaris*- und *Drechslera*-Arten an Getreide, Reis und Rasen, *Septoria nodorum* an Weizen, *Botrytis cinerea* an Erdbeeren, Gemüse, Zierpflanzen und Reben, *Mycosphaerella*-Arten an Bananen, Erdnüssen und Getreide, *Pseudocercosporella herpotrichoides* an Weizen und Gerste, *Pyricularia oryzae* an Reis, *Phakopsora*-Arten an Soja, *Phytophthora infestans* an Kartoffeln und Tomaten, *Pseudoperonospora*-Arten an Kürbisgewächsen und Hopfen, *Plasmopara viticola* an Reben, Alternaria-Arten an Gemüse und Obst sowie *Fusarium*- und *Verticillium*-Arten.

Sie sind außerdem im Materialschutz (z.B. Holzschutz) anwendbar, beispielsweise gegen *Paecilomyces variotii.*

Die Verbindung I und die Verbindungen II können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Als Verbindungen der Formel II kommen insbesondere solche in Frage, in denen die Gruppe R für isopropyl steht.

In einer Ausführungsform bedeutet die Gruppe A Benzthiazolyl, welches in 6-Position durch Halogen, insbesondere Fluor, substituiert ist.

Bevorzugt sind {1-[1-(6-Fluor-benzothiazol-2-yl)-ethylcarbamoyl]-2-methyl-propyl}-carbaminsäureester, besonders der entsprechende Isopropylester, insbesondere das Isomere {(S)-1-[(1R)-1-(6-Fluor-benzothiazol-2-yl)-ethylcarbamoyl]-2-methyl-propyl}-carbaminsäureisopropylester (common name: Benthiavalicarb) II.1:

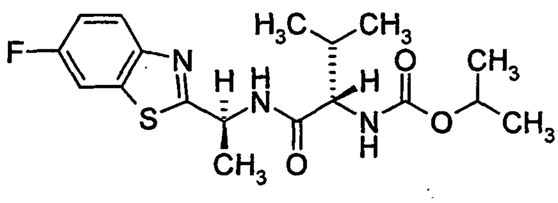

II.1

In einer anderen Ausführungsform bedeutet die Gruppe A Phenyl, welches in 4-Position durch Methyl substituiert ist.

Bevorzugt ist [2-Methyl-1-(1-p-tolyl-ethylcarbamoyl)-propyl]-carbaminsäureisopropylester, insbesondere das Isomere [(1S)-2-Methyl-1-(1-p-tolyl-ethylcarbamoyl)-propyl]-carbaminsäureisopropylester (common name: Iprovalicarb) II.2:

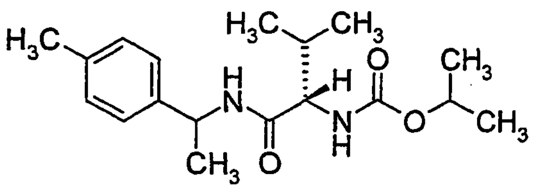

II.2

In einer weiteren Ausführungsform bedeutet die Gruppe A Naphthyl, welches in 1-Position mit dem Valinamidgerüst verknüpft ist.

Bevorzugt ist [2-Methyl-1-(1-naphthalen-1-yl-ethylcarbamoyl)-propyl]-carbaminsäure-isopropylester 11.3:

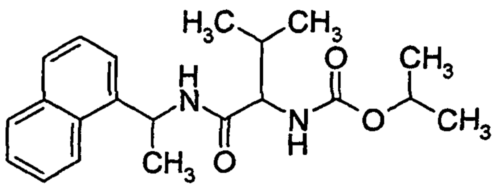

II.3

Bevorzugt setzt man bei der Bereitstellung der Mischungen die reinen Wirkstoffe I und II ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Als weitere Wirkstoffe im voranstehenden Sinne kommen insbesondere Fungizide ausgewählt aus der folgenden Gruppe in Frage:

- Acylalanine wie Benalaxyl, Metalaxyl, Ofurace, Oxadixyl,
- Aminderivate wie Aldimorph, Dodine, Dodemorph, Fenpropimorph, Fenpropidin, Guazatine, Iminoctadine, Tridemorph,
- Anilinopyrimidine wie Pyrimethanil, Mepanipyrim oder Cyprodinil,
- Antibiotika wie Cycloheximid, Griseofulvin, Kasugamycin, Natamycin, Polyoxin oder Streptomycin,
- Azole wie Bitertanol, Bromoconazol, Cyproconazol, Difenoconazole, Dinitroconazol, Enilconazol, Epoxiconazol, Fenbuconazol, Fluquiconazol, Flusilazol, Flutriafol, Hexaconazol, Imazalil, Ipconazol, Metconazol, Myclobutanil, Penconazol, Propiconazol, Prochloraz, Prothioconazol, Simeconazol, Tebuconazol, Tetraconazol, Triadimefon, Triadimenol, Triflumizol, Triticonazol,
- Dicarboximide wie Iprodion, Myclozolin, Procymidon, Vinclozolin,
- Dithiocarbamate wie Ferbam, Nabam, Maneb, Mancozeb, Metam, Metiram, Propineb, Polycarbamat, Thiram, Ziram, Zineb,
- Heterocylische Verbindungen wie Anilazin, Benomyl, Boscalid, Carbendazim, Carboxin, Oxycarboxin, Cyazofamid, Dazomet, Dithianon, Famoxadon, Fenamidon, Fenarimol, Fuberidazol, Flutolanil, Furametpyr, Isoprothiolan, Mepronil, Nuarimol, Penthiopyrad, Picobenzamid, Probenazol, Proquinazid, Pyrifenox, Pyroquilon, Quinoxyfen, Silthiofam, Thiabendazol, Thifluzamid, Thiophanat-methyl, Tiadinil, Tricyclazol, Triforine,
- Kupferfungizide wie Bordeaux Brühe, Kupferoxychlorid, Kupferhydroxid, Kupferoxid, (basisches) Kupfersulfat, Kupferoxychlorid-sulfat,
- Nitrophenylderivate, wie Binapacryl, Dinocap, Dinobuton, Nitrophthal-isopropyl
- Phenylpyrrole wie Fenpiclonil oder Fludioxonil,
- Schwefel,
- Sonstige Fungizide wie Acibenzolar-S-methyl, Carpropamid, Chlorothalonil, Cyflufenamid, Cymoxanil, Dazomet, Diclomezin, Diclocymet, Diethofencarb, Edifenphos, Ethaboxam, Fenhexamid, Fentin-Acetat, Fenoxanil, Ferimzone, Fluazinam, Fosetyl, Fosetyl-Aluminium, Hexachlorbenzol, Mandipropamid, Metrafenon, Pencycuron, Propamocarb, Phosphorige Säure, Phthalid, Toloclofos-methyl, Quintozene, Zoxamid,
- Strobilurine wie Azoxystrobin, Dimoxystrobin, Enestroburin, Fluoxastrobin, Kresoxim-methyl, Metominostrobin, Orysastrobin, Picoxystrobin, Pyraclostrobin oder Trifloxystrobin,
- Sulfensäurederivate wie Captafol, Captan, Dichlofluanid, Folpet, Tolylfluanid,
- Zimtsäureamide und Analoge wie Dimethomorph, Flumetover oder Flumorph.

In einer Ausführungsform der erfindungsgemäßen Mischungen werden den Verbindungen I und II ein weiteres Fungizid III oder zwei Fungizide III und IV beigemischt.

Mischungen der Verbindungen I und II mit einer Komponente III sind bevorzugt. Besonders bevorzugt sind Mischungen der Verbindungen I und II.

Die Verbindung I und die Verbindung II werden üblicherweise in einem Gewichtsverhältnis von 100:1 bis 1: 100, vorzugsweise 20:1 bis 1:20, insbesondere 10:1 bis 1:10 angewandt.

Die Komponenten III und ggf. IV werden gewünschtenfalls im Verhältnis von 20:1 bis 1:20 zu der Verbindung I zugemischt.

Die Aufwandmengen der erfindungsgemäßen Mischungen liegen je nach Art der Verbindung und des gewünschten Effekts bei 5 g/ha bis 1000 g/ha, vorzugsweise 50 bis 900 g/ha, insbesondere 50 bis 750 g/ha.

Die Aufwandmengen für die Verbindung I liegen entsprechend in der Regel bei 1 bis 1000 g/ha, vorzugsweise 10 bis 900 g/ha, insbesondere 20 bis 750 g/ha.

Die Aufwandmengen für die Verbindungen II liegen entsprechend in der Regel bei 1 bis 1000 g/ha, vorzugsweise 10 bis 500 g/ha, insbesondere 10 bis 350 g/ha.

Bei der Saatgutbehandlung werden im allgemeinen Aufwandmengen an Mischung von 1 bis 1000 g/100 kg Saatgut, vorzugsweise 1 bis 200 g/100 kg, insbesondere 5 bis 100 g/100 kg verwendet.

Das Verfahren zur Bekämpfung von Schadpilzen erfolgt durch die getrennte oder gemeinsame Applikation der Verbindung I und mindestens einer Verbindung II oder der Mischungen aus der Verbindung I und mindestens einer Verbindung II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen Mischungen, bzw. die Verbindungen I und II können in die üblichen Formulierungen überführt werden, z.B. Lösungen, Emulsionen, Suspensionen, Stäube, Pulver, Pasten und Granulate. Die Anwendungsform richtet sich nach dem jeweiligen Verwendungszweck; sie soll in jedem Fall eine feine und gleichmäßige Verteilung der erfindungsgemäßen Verbindung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln. Als Lösungsmittel / Hilfsstoffe kommen dafür im wesentlichen in Betracht:

- Wasser, aromatische Lösungsmittel (z.B. Solvesso Produkte, Xylol), Paraffine (z.B. Erdölfraktionen), Alkohole (z.B. Methanol, Butanol, Pentanol, Benzylalkohol), Ketone (z.B. Cyclohexanon, gamma-Butryolacton), Pyrrolidone (NMP, NOP), Acetate (Glykoldiacetat), Glykole, Dimethylfettsäureamide, Fettsäuren und Fettsäureester. Grundsätzlich können auch Lösungsmittelgemische verwendet werden,
- Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie LigninSulfitablaugen und Methylcellulose.

Als oberflächenaktive Stoffe kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkylarylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Ligninsulfitablaugen und Methylcellulose in Betracht.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht.

Pulver-, Streu- und Stäubmittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im allgemeinen zwischen 0,01 und 95 Gew.%, vorzugsweise zwischen 0,1 und 90 Gew.-% der Wirkstoffe. Die Wirkstoffe werden dabei in einer Reinheit von 90% bis 100%, vorzugsweise 95% bis 100% (nach NMR-Spektrum) eingesetzt.

Beispiele für Formulierungen sind: 1. Produkte zur Verdünnung in Wasser

A) Wasserlösliche Konzentrate (SL)

10 Gew.-Teile der Wirkstoffe werden in Wasser oder einem wasserlöslichen Lösungsmittel gelöst. Alternativ werden Netzmittel oder andere Hilfsmittel zugefügt. Bei der Verdünnung in Wasser löst sich der Wirkstoff.

B) Dispergierbare Konzentrate (DC)

20 Gew.-Teile der Wirkstoffe werden in Cyclohexanon unter Zusatz eines Dispergiermittels z.B. Polyvinylpyrrolidon gelöst. Bei Verdünnung in Wasser ergibt sich eine Dispersion.

C) Emulgierbare Konzentrate (EC)

15 Gew.-Teile der Wirkstoffe werden in Xylol unter Zusatz von Ca-Dodecylbenzolsulfonat und Ricinusölethoxylat (jeweils 5 %) gelöst. Bei der Verdünnung in Wasser ergibt sich eine Emulsion.

D) Emulsionen (EW, EO)

40 Gew.-Teile der Wirkstoffe werden in Xylol unter Zusatz von Ca-Dodecylbenzolsulfonat und Ricinusölethoxylat (jeweils 5 %) gelöst. Diese Mischung wird mittels einer Emulgiermaschine (Ultraturax) in Wasser eingebracht und zu einer homogenen Emulsion gebracht. Bei der Verdünnung in Wasser ergibt sich eine Emulsion.

E) Suspensionen (SC, OD)

20 Gew.-Teile der Wirkstoffe werden unter Zusatz von Dispergier- und Netzmitteln und Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs.

F) Wasserdispergierbare und wasserlösliche Granulate (WG, SG)

50 Gew.-Teile der Wirkstoffe werden unter Zusatz von Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs.

G) Wasserdispergierbare und wasserlösliche Pulver (WP, SP)

75 Gew.-Teile der Wirkstoffe werden unter Zusatz von Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs.

2. Produkte für die Direktapplikation

H) Stäube (DP)

5 Gew.Teile der Wirkstoffe werden fein gemahlen und mit 95 % feinteiligem Kaolin innig vermischt. Man erhält dadurch ein Stäubmittel.

I) Granulate (GR, FG, GG, MG)

0.5 Gew-Teile der Wirkstoffe werden fein gemahlen und mit 95.5 % Trägerstoffe verbunden. Gängige Verfahren sind dabei die Extrusion, die Sprühtrocknung oder die Wirbelschicht. Man erhält dadurch ein Granulat für die Direktapplikation.

J) ULV- Lösungen (UL)

10 Gew.-Teile der Wirkstoffe werden in einem organischen Lösungsmittel z.B. Xylol gelöst. Dadurch erhält man ein Produkt für die Direktapplikation.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubmitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Netzmittel, Adjuvants, Herbizide, Fungizide, andere Schädlingsbekämpfungsmittel, Bakterizide, gegebenenfalls auch erst unmittelbar vor der Anwendung (Tankmix), zugesetzt werden. Diese Mittel werden üblicherweise zu den erfindungsgemäßen Mitteln im Gewichtsverhältnis 1:10 bis 10: 1 zugemischt.

Die Verbindungen I und II, bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen,

Die fungizide Wirkung der Verbindung und der Mischungen lässt sich durch folgende Versuche zeigen:

Die Wirkstoffe wurden getrennt oder gemeinsam als eine Stammlösung aufbereitet mit 0,25 Gew.% Wirkstoff in Aceton oder DMSO. Dieser Lösung wurde 1 Gew.% Emulgator Uniperol® EL (Netzmittel mit Emulgier- und Dispergierwirkung auf der Basis ethoxylierter Alkylphenole) zugesetzt und entsprechend der gewünschten Konzentration mit Wasser verdünnt.

Anwendungsbeispiel - Wirksamkeit gegen die Netzfleckenkrankheit der Gerste verursacht durch *Pyrenophora teres* bei 1 Tag protektiver Anwendung

Blätter von in Töpfen gewachsenen Gerstenkeimlingen wurden mit wässriger Suspension in der unten angegebenen Wirkstoffkonzentration bis zur Tropfnässe besprüht. 24 Stunden nach dem Antrocknen des Spritzbelages wurden die Versuchspflanzen mit einer wässrigen Sporensuspension von *Pyrenophora [syn. Drechstera] teres,* dem Erreger der Netzfleckenkrankheit inokuliert. Anschließend wurden die Versuchspflanzen im Gewächshaus bei Temperaturen zwischen 20 und 24° C und 95 bis 100 % relativer Luftfeuchtigkeit aufgestellt. Nach 6 Tagen wurde das Ausmaß der Krankheitsentwicklung visuell in % Befall der gesamten Blattfläche ermittelt.

Die visuell ermittelten Werte für den Prozentanteil befallener Blattflächen wurden in Wirkungsgrade als % der unbehandelten Kontrolle umgerechnet:

Der Wirkungsgrad (W) wird nach der Formel von Abbot wie folgt berechnet:

$$W = (1 - \alpha/\beta) \cdot 100$$

α entspricht dem Pilzbefall der behandelten Pflanzen in % und

β entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Tabelle A - Einzelwirkstoffe

| Beispiel | Wirkstoff | Wirkstoffkonzentration in der Spritzbrühe [ppm] | Wirkungsgrad in % der unbehandelten Kontrolle |
|---|---|---|---|
| 1 | Kontrolle (unbehandelt) | - | (84 % Befall) |
| 2 | I | 1,25 | 53 |
| 3 | II.1 (Benthiavalicarb) | 6,25<br>1,25<br>0,25 | 0<br>0<br>0 |

Tabelle B - erfindungsgemäße Mischungen

| Beispiel | Wirkstoffmischung Konzentration Mischungsverhältnis | beobachteter Wirkungsgrad | berechneter Wirkungsgrad*) |
|---|---|---|---|
| 4 | I + II.1<br>1,25 + 0,25 ppm<br>5:1 | 64 | 53 |
| 5 | I + II.1<br>1,25 + 1,25 ppm<br>1:1 | 82 | 53 |
| 6 | I + II.1<br>1,25 + 6,25 ppm<br>1:5 | 88 | 53 |
| *) berechneter Wirkungsgrad nach der Colby-Formel | | | |

Aus den Ergebnissen der Versuche geht hervor, dass die erfindungsgemäßen Mischungen durch einen starken Synergismus erheblich besser wirksam sind, als nach der Colby-Formel vorausberechnet.

## Patentansprüche

**1.** Fungizide Mischungen zur Bekämpfung von pflanzenpathogenen Schadpilzen, enthaltend

1) das Triazolopyrimidinderivat der Formel I,

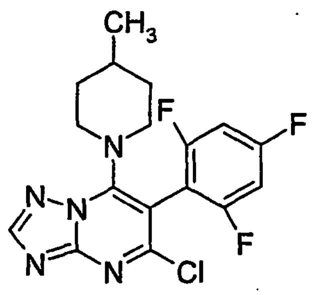

I

und

2) mindestens ein Valinamidderivat der Formel II,

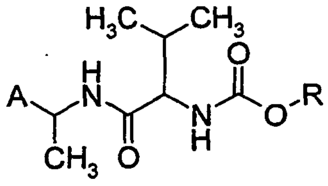

II

in der

A Phenyl, Naphthyl oder Benzothiazolyl, welche Gruppen unsubstituiert oder durch Methyl oder Halogen substituiert sind, und
R $C_1$-$C_4$-Alkyl bedeutet,

in einer synergistisch wirksamen Menge.

**2.** Fungizide Mischungen gemäß Anspruch 1, enthaltend als Valinamidderivat Benthiavalicarb der Formel II.1.

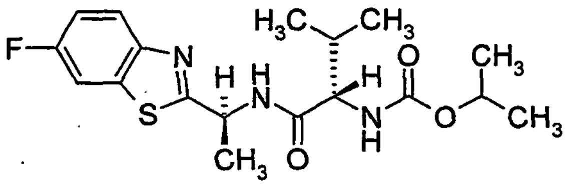

II.1

**3.** Fungizide Mischungen gemäß Anspruch 1, enthaltend als Valinamidderivat Iprovalicarb der Formel 11.2.

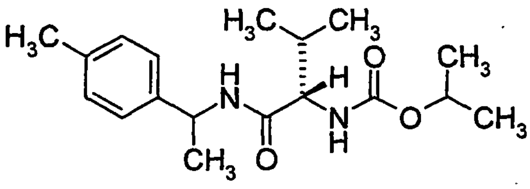

II.2

**4.** Fungizide Mischungen gemäß einem der Ansprüche 1 bis 3, enthaltend die Verbindung der Formel I und die Verbindung der Formel II in einem Gewichtsverhältnis von 100:1 bis 1:100.

**5.** Mittel, enthaltend einen flüssigen oder festen Trägerstoff und eine Mischung gemäß einem der Ansprüche 1 bis 4.

**6.** Verfahren zur Bekämpfung von pflanzenpathogenen Schadpilzen, **dadurch gekennzeichnet, dass** man die Pilze, deren Lebensraum oder die vor Pilzbefall zu schützenden Pflanzen, den Boden oder Saatgüter mit einer wirksamen Menge der Verbindung I und der Verbindung II gemäß Anspruch 1 behandelt.

**7.** Verfahren nach Anspruch 6, **dadurch gekennzeichnet, dass** man die Verbindungen I und II gemäß Anspruch 1 gleichzeitig, und zwar gemeinsam oder getrennt, oder nacheinander ausbringt.

**8.** Verfahren nach Ansprüchen 6 oder 7, **dadurch gekennzeichnet, dass** man die Verbindungen I und II gemäß Anspruch 1 oder die Mischungen gemäß einem der Ansprüche 1 bis 4 in einer Menge von 5 g/ha bis 1000 g/ha aufwendet.

**9.** Verfahren nach einem der Ansprüche 5 bis 7, **dadurch gekennzeichnet, dass** man die Verbindungen I und II gemäß Anspruch 1 oder die Mischung gemäß einem der Ansprüche 1 bis 4 in einer Menge von 1 bis 1000 g/100 kg Saatgut anwendet.

**10.** Saatgut, enthaltend die Mischung gemäß einem der Ansprüche 1 bis 4 in einer Menge von 1 bis 1000 g/100 kg.

**11.** Verwendung der Verbindungen I und II gemäß Anspruch 1 zur Herstellung eines zur Bekämpfung von Schadpilzen geeigneten Mittels.

## Claims

**1.** A fungicidal mixture for controlling phytopathogenic harmful fungi, which mixture comprises

1) the triazolopyrimidine derivative of the formula I

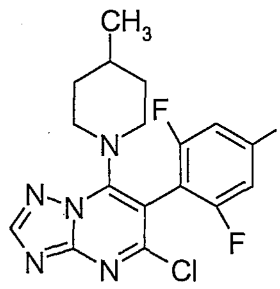

I

and
2) at least one valinamide derivative of the formula II

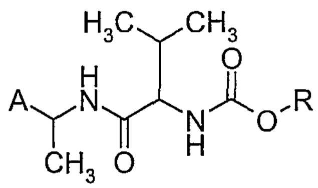

II

in which

A is phenyl, naphthyl or benzothiazolyl, these groups being unsubstituted or substituted by methyl or halogen, and
R is $C_1$-$C_4$-alkyl,

in a synergistically effective amount.

**2.** The fungicidal mixture according to claim 1, comprising, as valinamide derivative, benthiavalicarb of the formula II.1.

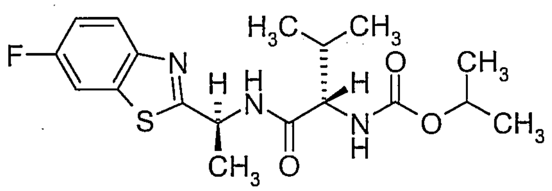

II.1

**3.** The fungicidal mixture according to claim 1, comprising, as valinamide derivative, iprovalicarb of the formula II.2.

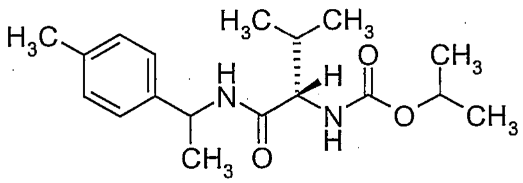

II.2

4. The fungicidal mixture according to any of claims 1 to 3 comprising the compound of the formula I and the compound of the formula II in a weight ratio of from 100:1 to 1:100.

5. A composition comprising a liquid or solid carrier and a mixture according to any of claims 1 to 4.

6. A method for controlling phytopathogenic harmful fungi which comprises treating the fungi, their habitat, or the seed, the soil or the plants to be protected against fungal attack with an effective amount of the compound I and the compound II according to claim 1.

7. The method according to claim 6, wherein the compounds I and II according to claim 1 are applied simultaneously, that is jointly or separately, or in succession.

8. The method according to claim 6 or 7, wherein the compounds I and II according to claim 1 or the mixtures according to any of claims 1 to 4 are applied in an amount of from 5 g/ha to 1000 g/ha.

9. The method according to any of claims 5 to 7, wherein the compounds I and II according to claim 1 or the mixtures according to any of claims 1 to 4 are applied in an amount of from 1 to 1000 g/100 kg of seed.

10. Seed comprising the mixture according to any of claims 1 to 4 in an amount of from 1 to 1000 g/100 kg.

11. The use of the compounds I and II according to claim 1 for preparing a composition suitable for controlling harmful fungi.

**Revendications**

1. Mélanges fongicides pour lutter contre des champignons nuisibles phytopathogènes, contenant :

1) le dérivé de triazolopyrimidine de formule I :

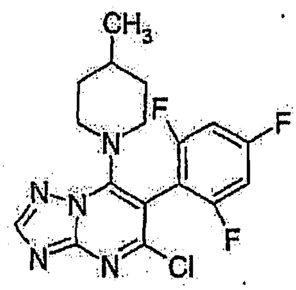

I

et

2) au moins un dérivé de valinamide de formule II :

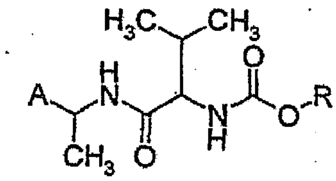

II

dans laquelle :

A représente un groupe phényle, naphtyle ou benzothiazolyle, lesquels groupes sont non substitués ou substitués par un méthyle ou un halogène, et
R représente un alkyle en $C_1$-$C_4$,

en quantité efficace au plan synergique.

2. Mélanges fongicides selon la revendication 1, contenant le benthiavalicarbe de formule II.1 comme dérivé de valinamide :

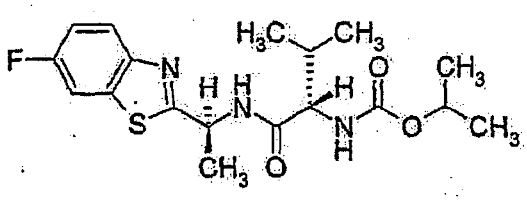

II.1

3. Mélanges fongicides selon la revendication 1, contenant l'iprovalicarbe de formule 11.2 comme dérivé de valinamide :

14

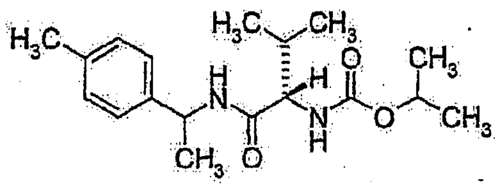

II.2

4. Mélanges fongicides selon l'une des revendications 1 à 3, contenant le composé de formule I et le composé de formule II dans un rapport pondéral de 100:1 à 1:100.

5. Agent contenant un véhicule liquide ou solide et un mélange selon l'une des revendications 1 à 4.

6. Procédé pour lutter contre des champignons nuisibles phytopathogènes, **caractérisé en ce que** l'on traite les champignons, leur biotope ou les plantes que l'on souhaite protéger de l'attaque fongique, le sol ou les semences avec une quantité efficace du composé I et du composé II selon la revendication 1.

7. Procédé selon la revendication 6, **caractérisé en ce que** l'on effectue l'épandage des composés I et II selon la revendication 1, de manière simultanée, à savoir conjointement ou séparément, ou de manière consécutive.

8. Procédé selon la revendication 6 ou 7, **caractérisé en ce que** l'on applique les composés I et II selon la revendication 1 ou les mélanges selon l'une des revendications 1 à 4, en quantité de 5 g/ha à 1000 g/ha.

9. Procédé selon l'une des revendications 5 à 7, **caractérisé en ce que** l'on utilise les composés I et II selon la revendication 1 ou le mélange selon l'une des revendications 1 à 4, en quantité de 1 à 1000 g/100 kg de semences.

10. Semences contenant le mélange selon l'une des revendications 1 à 4, en quantité de 1 à 1000 g/100 kg.

**11.** Utilisation des composés I et II selon la revendication 1, pour la fabrication d'un agent approprié pour lutter contre des champignons nuisibles.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9846607 A
- EP 472996 A
- DE 4321897 A
- WO 9607638 A
- DE 19531814 A
- JP 9323984 A
- EP 988790 A
- US 6268371 B


### In der Beschreibung aufgeführte Nicht-Patentliteratur


- **COLBY, S. R.** Calculating synergistic and antagonistic responses of herbicide Combinations. *Weeds,* 1967, vol. 15, 20-22